# EUROPEAN PATENT APPLICATION

(11) **EP 2 164 007 A1**
(43) Date of publication of application: **17.03.2010**
(21) Application number: 09168528.9
(22) Date of filing: 24.08.2009
(51) Int. Cl.: G06F 17/30

(54) **Data storage and fusion layer**

(30) Priority: 08.06.2009 GB 0909808; 11.09.2008 GB 0816657; 24.07.2009 EP 09166403
(71) Applicant: Neutrino Concepts Ltd., 2nd floor, 3 Brindley Place Birmingham, West Midlands B1 2JB (GB)
(72) Inventor: Foody, Patrick, Wakefield, Yorkshire WF3 1UZ (GB)
(74) Representative: Barton, Russell Glen

(57) **Abstract**

A data storage apparatus, for allowing analysis of stored data, in which data values are stored which belong to a plurality of attributes, the apparatus comprising a computer system including a storage memory,
a group of two or more collections of data, the group stored in the storage memory and (belonging) to a base attribute of the plurality of attributes, each collection of data corresponding to the same value of a base attribute comprising, a data value belonging to an attribute associated with the base attribute , an attribute identifier corresponding to the attribute associated with the base attribute, and an identifying data value belonging to the base attribute or being stored in a location relative to one or more other collections of data from which location an identifying data value belonging to the base attribute can be determined,
and wherein two or more of the collections of data contain equivalent, and preferably identical, identifying data values, or the identifying values determined by their locations relative to other collections are equivalent, and preferably identical, and have attribute identifiers which correspond to, and data values belonging to, second attributes that are different from each other and to the base attribute but are associated with the base attribute.

## Description

This invention relates to an apparatus and method for storing and/or analysing data.

It is known to provide a relational database an example of which is described below for the purposes of the invention.

It is known to analyse such a database by performing relational operations based on set based theory. These involve joining tables together to produce a result view. However, where the database is large these joins are computationally very expensive. Further in order that analytics can be undertaken in reasonable time frame it is necessary to provide the database in a single storage device such as a hard disk drive. For very large databases this requires custom built expensive and complex hard disk based storage units together with a very fast high end processor.

Additionally analytic results of relational databases typically only show positive results and do not inform a user that there are any negative results such as categories with zero results. Techniques, such as outer joins, windowing functions and other development techniques may be specifically used to attempt counter this problem but these are far more computationally expensive than equi-joins of relations and must be customised for each use.

For these and other reasons conventional data warehouses are unable to adapt quickly to changes in business requirements in hours and instead will take days or months for a complete overhaul. The larger the data warehouse the more difficult is to reflect the business requirements, in logical and physical data models. In order to take advantage of new business opportunities e.g. mergers and acquisitions, new business models users often have to access different information structures to compile answers to the new business questions. Data warehouses also fail to align information architecture and IT with strategic goals: making information available to all users when they need it and in the form that they need it

Additionally modelling involves creating an abstraction of important elements from the business requirements and even senior executives, have difficulty articulating their vision in a thorough and complete manner to the business analysts documenting the business requirements

It is an object of the invention to at least mitigate one or more of these problems.

In accordance with a first aspect of the invention there is provided a data storage apparatus, for allowing analysis of stored data, in which data values are stored which belong to a plurality of attributes, the apparatus comprising a computer system including a storage memory,
a group of two or more collections of data, the group stored in the storage memory and (belonging) to a base attribute of the plurality of attributes, each collection of data corresponding to the same value of a base attribute comprising, a data value belonging to an attribute associated with the base attribute , an attribute identifier corresponding to the attribute associated with the base attribute, and an identifying data value belonging to the base attribute or being stored in a location relative to one or more other collections of data from which location an identifying data value belonging to the base attribute can be determined,
and wherein two or more of the collections of data contain equivalent, and preferably identical, identifying data values, or the identifying values determined by their locations relative to other collections are equivalent, and preferably identical, and have attribute identifiers which correspond to, and data values belonging to, second attributes that are different from each other and to the base attribute but are associated with the base attribute.

In accordance with a second aspect of the invention there is provided data analytics searching apparatus, wherein the results of a plurality of queries such as in the form of selected metrics to be measured against selected axioms, are stored in a memory and wherein the apparatus provides a filter interface with a first input and is configured to filter the results of the plurality of queries based on entries into the first input of the filter interface and/or display the results of the plurality of queries or the filtered results of the plurality of queries in graphical from, preferably in the form of a carousel, allowing a user to move between the different graphs.

Embodiments of the invention will now be described, by way of example only, with reference to the following drawings in which:
Figure 1a is a representation of a conventional table containing name data and forming part of a relational database;
Figure 1b is a representation of a conventional table containing address data and forming part of the same relational database as the table of Figure 1a;
Figure 1c is a representation of a conventional table containing account data and forming part of the same relational database as the table of Figure 1a;
Figure 1d is a representation of a conventional table containing account type data and forming part of the same relational database as the table of Figure 1a;
Figure 2 is a schematic of computer apparatus in accordance with the invention;
Figure 3 is a flow chart of the processing of loading data into a storage structure in accordance with the invention;
Figure 4 is an illustration of metadata for the linear storage of the data in the tables of Figures 1a to 1d;
Figure 5a is an illustration of linear storage of the data in the tables of Figures 1a to 1d based around a first customer;
Figure 5b is an illustration of linear storage of the data in the tables of Figures 1a to 1d based around a second customer;
Figure 5c is an illustration of linear storage of the data in the tables of Figures 1a to 1d based around a third customer;
Figure 6a is an illustration of hot metadata for the linear storage of the data in the tables of Figures 1a to 1d;
Figure 6b is an illustration of cold metadata for the linear storage of the data in the tables of Figures 1a to 1d;
Figure 7a shows a result set of an analytic applied to the tables of Figures 1a to 1d;
Figure 7b shows a result set of an analytic applied to an amended version of linear storage of data of Figures 5a to 5c;
Figure 7c shows a result set of an second analytic applied to the linear storage of data of Figures 5a to 5c;
Figure 7d shows a result set of a second analytic applied to the linear storage of data of Figures 5a to 5c with predetermined memory compartments;
Figure 7e is a representation of a dimension table defining a hierarchy of location attributes and containing location data, which can form part of the same relational database as Figure 1a;
Figure 7f is a template for proving the result set of an analytic applied to the linear storage tables of Figure 5a to 5c or 9a to 9c using the dimension table of Figure 7e;
Figure 7g is the result set of an analytic applied to the linear storage tables of Figure 5a to 5c using the dimension table of Figure 7e;
Figure 8 is an illustration of a second embodiment of metadata for the linear storage of the data in the tables of Figures 1a to 1d;
Figure 9a is an illustration of linear storage of the data in the tables of Figures 1a to 1d based around a first customer using the second embodiment of Figure 8;
Figure 9b is an illustration of linear storage of the data in the tables of Figures 1a to 1d based around a second customer using the second embodiment of Figure 8;
Figure 9c is an illustration of linear storage of the data in the tables of Figures 1a to 1d based around a third customer using the second embodiment of Figure 8;
Figure 10 is a screenshot of a search filter interface for searching through results of analytics in accordance with the invention;
Figure 11 is a screenshot of the search filter interface of Figure 10 together with the corresponding filter results; and
Figure 12 is a screen shot of the filter results of Figure 11.

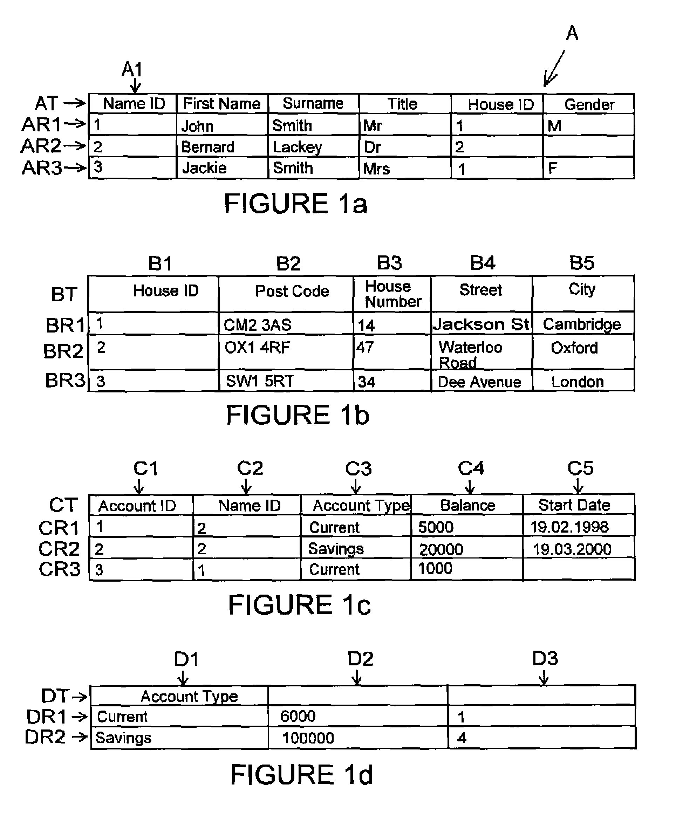

Referring to Figures 1a to 1d there are shown four tables forming the whole or part of a conventional relational database described here for illustration purposes only.

For the purposes of this invention a relational database may refer to a strict relational database, an SQL database an Oracle based database or any other equivalent database. The terminology used may refer to any of these.

In Figure 1a is shown table A having six columns A1, A2, A3, A4, A5 and A6, three rows (also known as tuples) of data AR1, AR2, AR3 along with a row AT which contains meta-data in the form of column identifiers.

In column A1, row AT is contained the phrase 'name ID' which indicates that all of the data represented in the rows AR1 to AR3 in column A1 are examples of name IDs. In a similar manner columns are attributes A2, A3, A4, A5 and A6 containing first name, surname, title, house ID and gender of individuals. Each row A1, AR2 and AR3 contains data on a specific individual with each column/attribute containing data to represent the same individual.

In this case in AR1 there is information on Mr John Smith, AR2 contains information on Dr Bernard Lackey and AR3, Mrs Jackie Smith. The name ID column A1 is present in order to have a unique identifier (sometimes know as a primary key) for the individuals given that it is possible that there could be multiple people either with the same surname, first name or both. Indeed in this example, both John Smith in row AR1 and Jackie Smith in row AR3 have the same surname in attribute A3. The values in attribute A5 also acts as a foreign key to another table as described below.

In the gender attribute A6 there is a blank entry in row AR2. Blank entries in relational databases are not uncommon, especially since the requirements of the data entrants may change over time. For example it may be that the relational database initially did not have a column 6 for gender and this was later added. If Dr Bernard Lackey was added before the gender column was added it may be that this data was never determined.

The only reference to an address in table A is a simple reference to a "house ID", the values in this example being "1", "2" and "1", in column A5 rather than full details of the address.

Referring to table B in Figure 1B there is shown a table of address information of the same individuals. Table B comprises five attributes, B1, B2, B3, B4 and B5 with three rows or tuples of data BR1, BR2 and BR3 along with a row BT containing the meta-data describing what the columns represent. In this case B1 contains the house ID, B2 contains a post code, B3 a house number, B4 a street and B5 the city in which an individual lives.

Table A has no direct data on the names of any individuals but tables A and B are linked using the values of house ID in columns A5 and B1 as foreign keys. Dr Bernard Lackey in row AR2 of Table A has the house ID "2" and therefore in order to look up his address information Table B is referred to for the information contained in the row in which there is a house ID "2". As can be seen this house ID "2" in column BR2, which corresponds to where Dr Bernard Lackey lives, is in row BR2 and informs any users that Dr Bernard Lackey is recorded as living at 47 Waterloo Road Oxford, OX1 4RF.

John Smith and Jackie Smith, in rows AR1 and AR3, both have the house ID A5 recording of "1" and using this foreign key to refer to table B , their place of residence is recorded in row BR1 and is 14 Jackson Street Cambridge, CM2 3AS. Advantages of using related tables in this way rather than containing all of this information in table A include that there is an avoidance of duplication, so that this example the Jackson St address data does not have to be entered twice for John Smith and Jackie Smith. Additionally if it is necessary to alter the spelling or a mistake in an address it means that table A does not have to be amended. In the case where people share the address such as John and Jackie Smith it means that if an address must be corrected it will only have to be done once. Lastly if an individual was to move from one house that was already in the system to another it would be a matter of simply updating the house ID in table A rather than entering new address information as this information would already be in table B and could be referred to by the house ID foreign key.

In Figure 1c is shown a third table C which contains balances and start dates of accounts. Table C contains five attributes C1, C2, C3, C4 and C5 along with three rows of data CR1, CR2 and CR3 and a row CT of meta-data containing the identifiers describing each attribute. In this example account IDs are in C1, name IDs in C2 account types in C3, the balance of each account in C4and the start date in C5.

As shown table C contains three accounts, each with a unique account ID (a primary key), "1" "2" and "3"; a reference to a name ID (acting as a foreign key to Table A) which shows that the first two accounts both belong to Dr Bernard Lackey and the third one to John Smith; and an account type which shows that the John Smith account is a current account whereas Bernard Lackey has current and savings accounts. The balances in each of those accounts and the start date are also provided. As is shown there is no information on the start date of John Smith's current account in row CR3 attribute C5. The name ID attribute C2 acts as a foreign key with equivalent name ID column A1 in table A. Accordingly the name ID "1" in CR3 enables the operation of database 10 to associate this information with row AR1 which also contains ID "1" identifying the current account of £1,000 to be John Smith's.

In table D is shown a table containing information on account types. This has three attributes, D1, D2 and D3 along with two rows DR1, DR2 of data and a row of meta-data DT identifying different attributes. The attributes D1, D2 and D3 contain "account type", "maximum balance" of those account types and the "interest rate" of those account types respectively. Table D states that current accounts have a maximum balance of £6,000 and an interest rate of 1%, whilst savings accounts have a maximum balance of £100,000 and an interest rate of 4%. The foreign key enabling table D to be associated with table C is the account type. Accordingly the account ID "1" in CR1 belonging to Bernard Lackey (associated by virtue of the name ID "2") is a current type which from table D we know has a maximum balance of £6,000 and an interest rate of 1%.

In this case there are only three accounts illustrated and two account types, but in practical examples there could be thousands of account IDs and only a few account types so that the relational model containing this maximum balance interest rate information in a separate table D does prevent significant duplication of the information compared to if it was stored within table C. Relational databases are deliberately built for future growth such that this duplication will be avoided even if it is not presently required with the current data. That is even if there was only one current account and one savings account in table C the specific information on this account type would still be stored in a separate table in case additional data was added where in the future there would be more than one current and more than one savings account.

There is only one foreign key linking one table to another table in this example, but the use of the all foreign keys can link all of the tables together so that for example we can know that Bernard Lackey lives in Oxford using the house ID "2" as a foreign key, that he has a current and savings account using his name ID "2" as the foreign key and that these have an interest rate of 1% and 4% respectively using the account type as a foreign key.

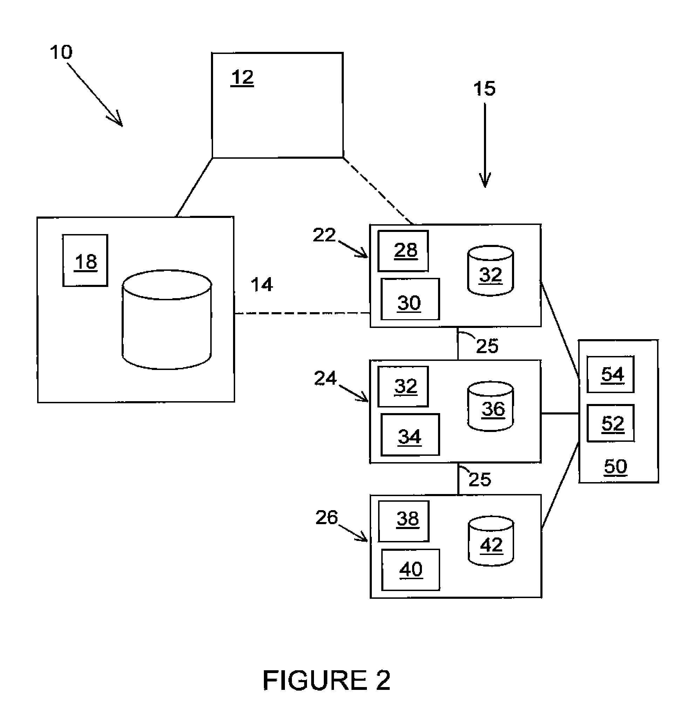

In Figure 2 there is shown apparatus 10, in accordance with the invention, comprising an SQL database unit 14 and linear data storage and fusion processing system 15. In addition these two units, 14 and 15 are in communication with a computer 12 for sending a customer file.

The SQL database unit 14 is conventional unit that might ordinarily contain a large database, such as an Oracle or SQL database. Unit 14 contains a very large custom built hard disk drive 16 (though it could use other suitable storage devices) along with a custom built processor 18. As will be discussed below, due to the advantages of the invention, instead of the very large hard disk drive 16 as will conventionally be used to contain a large Oracle/SQL database alternatives embodiments where all analytics are performed by the fusion processing system 15 have the data even in the SQL/relational form in unit 14 stored in multiple smaller hard disk drives in communication with each other.

The linear storage and fusion processing system 15 comprises multiple computers and in this example there are shown as three computers, 22, 24 and 26. Each of the computers contains a CPU 28, 32, 38, RAM 30, 34, 40 and a hard disk drive (or other suitable storage medium) 32, 36, 42. Each of the computers 22, 24 and 26 is in communication with each other via communication paths 25. Additionally system 15 may contains a further processing computer 50 comprising a CPU 52 and RAM 54. The computer 50 may also contain other types of memory/storage which are faster than the hard disks 32, 36 and 42. For example the computer 50 may contain solid state memory.

The SQL unit 14 is intended to be populated by a conventional Oracle/relational database and the linear storage system 15 by data structured in a new linear manner.

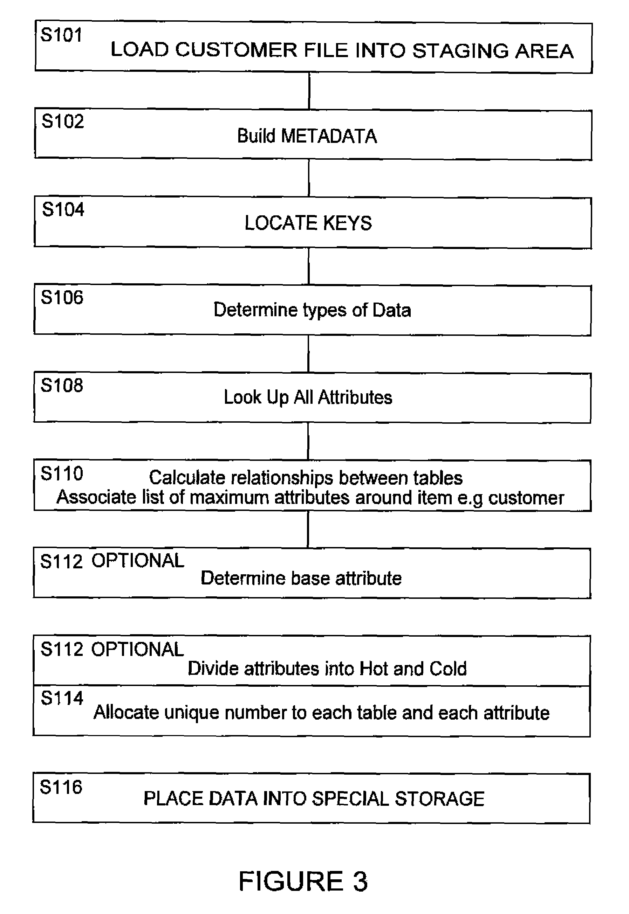

A flow process 100 for populating the unit 14 and system 15 for use for analytics and in accordance with the invention is shown in Figure 3.

First at step S101 the system receives a customer file of data from customer computer 12 by a conventional medium such as the internet. This can be received in the same manner as would be for the conventional building of an Oracle or other relational/SQL database from a customer file. The customer file is loaded into the SQL unit 14 in the custom built hard disk drive storage 16 in a conventional manner. The data is stored in the form of an Oracle database.

Next at step S102, system 15 builds meta-data from the customer file or from the constructed database in hard disk drive 16. This can be done by any of processors 18, 28, 32, 38 or 52 or by an additional separate processor. Building the meta-data involves determining what the data actually means which can be determined from a part of the customer file.

Next at step S104 the system 10 locates the keys (primary and foreign) forming part of the relational database in drive 16 and determines from this which attributes are associated with which so that it is understood how all of the data values are related.

At step S106 it is determined what type of data is being read and places the data into pre-determined categories such as event based data or dimension based data

Next at step S108 all of the attributes within the drive 16 are read and understood.

Next at step S110 these attributes together with the keys located at step S104 and used to calculate relationships between the tables.

The process may then stop after section S110 until specific analytics are specified that it is wished to be calculated. Alternatively, the process may continue through to step S110 Step S110 and the following steps lead to storage of data in a linear form in databases 32, 36 and 42 based around a particular attribute and the attribute which these are based around may depend on the analytics required. Accordingly in some instances it can be suitable to wait until the analytics are required before choosing the particular attribute and performing these steps.

At step S111 it is determined the base attribute around which all other attributes should be associated. Commonly these may be a name ID since many analytic are based around customers and its is generally easy for all information stored in a database such as transaction data to be traced back to be identifiable to one particular person.

Next there is an optional step, step 112 where the attributes are divided into hot and cold attributes. This is a reference to how useful they are likely to be for the purposes of analytics. "Hot" refers to those attributes which are likely to be used regularly for analytics whereas "cold" refers to those which are unlikely to be used. This step eventually leads to the hot and cold data being stored separately thereby allowing analytics to run through the hot attributes only thus reducing the amount of data which needs to be read through. In the small percentage of cases where the cold data must be used then of course the hot and the cold data can be read through as part of a slower process. This is accessed via a data link between the hot and cold datasets.

Next at step S114 the system 10 associates a new number to each table in the database and each attribute within it, or alternatively just to each attribute.

Lastly in step S 116 each of these attributes are then stored. Each of the items around which other attributes are to be associated is listed, such as by listing all name IDs and then a complete list of attributes is stored against that person with a listing of the table unique numbers and/or attribute unique numbers of the items/facts.

For example, this data is then stored in databases 32, 36 and 42, with preferably complete examples of data associated with a particular name ID being stored in the same database, e.g., either hard disk drive 32, 36 or 42. However, it is not important which database each of the complete examples are stored in and they can be stored across the three in any order.

This linear stored data may for example be stored in the form
"*[unique number representing name ID (or other base attribute) value: unique number of associated attribute: unique number representing table in relational database to which associated attribute belongs: data value belonging to associated attribute and corresponding to name ID value]*
with the simplest embodiments having the data values including customer ID values in the same form as in the SQL database.

In such a form it can be easily determined which tables the each unique number refers to, which attribute each unique number refers to and which customer each unique number refers to. The positioning of this number between the two square brackets can then be used to identify which of these it refers to. In preferable embodiments, however, all for these characteristics are determined by a data entry and not by ordinal position relative to other sets of square brackets or any data outside its own square brackets.

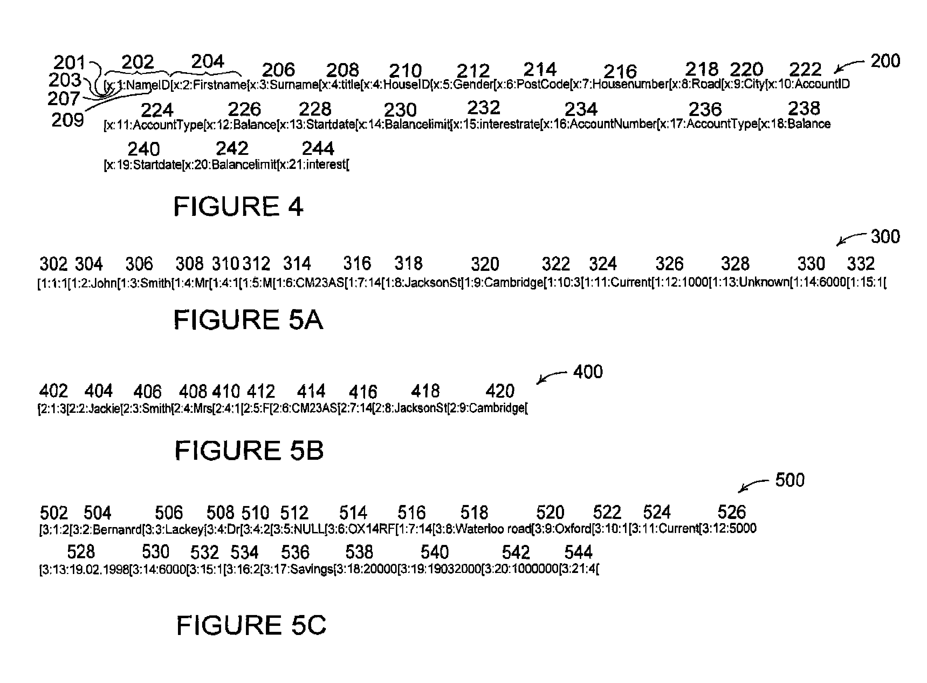

There can be one of the data collections with beginning and ending square bracket sections, as shown above, for each data value in the SQL database which has been associated with a particular person (or whatever base attribute it is decided to associate the other attributes about). The data collections for a given name ID value are typically stored in a single line though the order of them within that line is normally irrelevant since all of the numbers used to determine the meta-data and the data is contained within each beginning and ending square bracket collection. This has the advantage (as will be seen with the examples in Figure 4 below) that the a data collection can be simply deleted from a linear row without causing any difficulty.

In Figure 4 is shown an example 200 of the meta-data for tables A, B, C and D from Figure 1 if loaded through process 100 so that the data is stored into hard disks 32, 36 and 42.

When the tables A, B, C are loaded through process 100, at step S101 a source system number of the customer file may be allocated. Next at step S102 descriptions of attributes are found for the first table A in the first row AT as "Name ID", "First Name", "Surname", "title", "house ID" and "gender" and each of these is allocated a different number. Next for Table B the descriptions of attributes are found in row BT and each is given a new different number . There is one number per attribute found and at this stage there need be no attempt to determine which attributes are the same so that "House ID" will normally be given two numbers, one for its entry in Table A and one for its entry in table B. The same process is then repeated for tables C and D.

The number given to each attribute can be sequential, based on the ordinal position of the order of the attributes in the tables.

At step S104 the system makes a first guess as to which attributes are likely to be keys based on the names of the descriptors discovered in step S102. For example keys may typically end in ID, DAT or Amt. In the case of tables A to D this first guess will pick "Name ID" twice, "House ID" twice, and "Account ID". The user is then asked to validate of these are all keys and if there are any unidentified keys. In this cases all of these can be verified as keys but a further key "Account Type" was not identified and the user adds this manually. The user can then be asked whether descriptors that end in "Type" should be guessed as being keys in future.

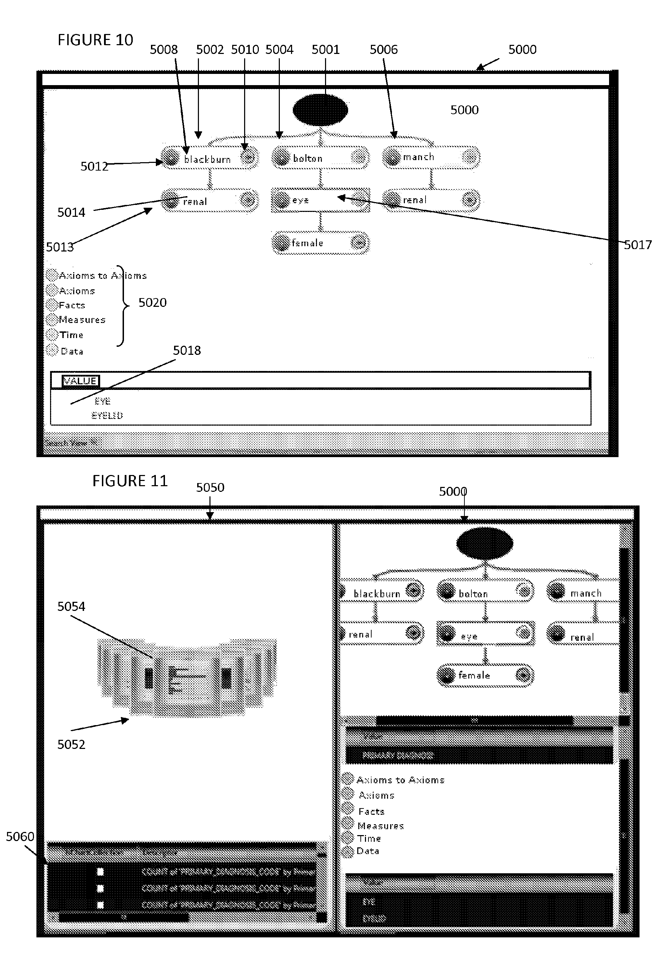

At step S106 the system again looks for compliance with naming conventions. For example dimension data (described in more detail below with reference to Figure 10) is often described in the format "Dim_" and Fact data as "Fact_". After such guesses there is again a user validation step. In this case all of the data is considered fact. In an alternative embodiment there may be the dimension based table 4000 containing the relationship between different parts of an address such as a country, region , country, city in a hierarchy.

Step S110 is only applied to dimension tables and therefore does not apply to tables A to D.

Step S111 is then a manual user driven step. It can be based on guesses or on historical data.

In Figure 4 the 'X' 201 which is immediately to the right of each square bracket refers to a number unique to each linear entry in the database which in this case will be based around the particular individuals and in simpler embodiments is identical to the Name ID value. For this reason the first collection 202 held between the first and second square brackets is arguably superfluous with the name ID being effectively equivalent to the 'X' 201. Nevertheless a standard approach of the invention is to include entries for each item of data in the tables A, B, C, D and so this example includes the name IDs.

After each X 201 is a first colon 203 and then a number. This number refers to a particular attribute contained in tables in the database. For metadata collection 202 this number is '1' and is a reference the first attribute of the first table which is column A1 of table ID which is the name ID. As described above, this could be indicated by having a number for the table, in this case table A, and the number of column table 1 or as is in the illustrated example just a different number for each attribute with the numbering sequence of attributes continuing through each of the tables. Duplication such as where name ID column is contained in both table A at A1 and table C at column C2 is avoided by only entering this attribute once. In some embodiments data my be duplicated for example for ease of searching as with the embodiments illustrated by the examples in Figures 10 and 11 below.

After this number which refers to the attribute, there is a second colon 207 and then the meta-data descriptor at 209 indicates the form of value to be contained in the equivalent position in any given linear string of stored data. For collection 202 this simply refers to "name ID". The following square bracket at the end of 202 then marks the end of the collection and the beginning of the next. The following collections follow the same format. As an example collection 204, starts 'X' 201 which will be for the same given customer and therefore be the same X as is collection 202, then a first colon, then a '2' which is a different number to the '1' used in collection 202 identifying that the value stored belongs to a different attribute which in this case is equivalent to column A2 and is the first name. After the colon is meta-data equivalent to box A2, AT in table A and therefore containing the information 'first name'.

Once this meta-data has been created at steps S102, S104, S106, S108 and S110, the individual data values are stored at steps S112, S114 and S116. These are shown in Figures 5A, 5B and 5C.

In Figure 5A is shown the linear data entry 300 in unit 15 for name ID "1". As shown in the first collection 302 it reads '1:1:1' This refers to it being the first line of linear data entry, that is the attribute with unique reference "1",which according to the metadata in Figure 3 is the name ID, and then finally that the specific data value in this case is "1" and therefore by virtue of the meta-data the name ID in this case is 1. Accordingly this information is equivalent to entry AR1 in table A.

Collection 304 is written as a continuous entry from 312, only separated by a square bracket. Collection 304 contains the data '1:2:John'. The first element of this data refers to the fact that this is the same as linear entry number 1 and therefore is associated around this same base attribute value, in this example the same person, as collection 302. The second element indicates that information contained belongs to attribute number "2", which according to the meta-data 200 is the 'first name'. The third element indicates that the data value for this attribute and customer ID is 'John' and therefore equivalent to entry A2 AR1 in table A. The rest of the information, in row AR1 is then contained in collections 306, 308, 310 and 312.

In collection 314 the data contained is '1:6:CM23AS'. The first '1' relates to the fact that this is the same linear data entry and therefore for the same customer as all of collections 302 to 312. The '6' is the unique number of the attribute which according to the meta-data in Figure 3 is the postcode, and the data value CM23AS is therefore the postcode for this specific individual and is equivalent to B2BR1 in table B. Sections 326, 328 and 330 are equivalent to the other data entries in row BR1, though there is no repetition of the house ID, i.e., the information in B1, BR1, since it is identical to the data value in collection 310.

The next collection 322 contains the information '1:10:3' which means that it relates to the same customer as collections 302 to 320, that the attribute is referred to by unique number 10 (which according to meta-data in Figure 3) is the "account ID" and that the specific account ID in this case is number "3". Accordingly this is equivalent to entry C1, CR3 in table 3. It is apparent that whereas the previous collections had values from the first row AR1 and BR1 of the first tables A and B, the subsequent collections 324, 326 and 328 are from the third row of table C. This is because the system does not simply run through rows based on position but instead the data is associated around a given base attribute which in this case is the customer. In this case the customer ID is '1', John Smith, and therefore in table C it is only those rows which contain name ID of '1' in column C2 referring to the name ID which should be associated with John Smith. In this case there is only one such account which is account ID "3" in row CR3 and therefore this is the only information present.

Entry 328 is for the start date of the account which is equivalent to entry C3 CR3 in table C which was left blank. Along with the meta-data in Figure 3 the system 15 will can be programmed for each of the attributes to clarify from a user what type of data should be entered or to enter a predetermined value. So, for instance, in the example of a start date it would specify that it should be in the day, month, year format, and further it may request what should happen in the case of a 'no entry'. In this case it is predetermined that in terms of 'no entry' it should be stated 'unknown'. This can be of significance for analytics/queries as will be described in examples below.

In Figure 5B is shown second linear data entry 400. Because it is the second linear data entry it relates a different customer to the first 300 and therefore has a different unique number at the start of each section which in this case is number "2". As can be seen from collections 402, 404 and 406, this is data for Jackie Smith. The data has been built around Jackie Smith based on the data associated with her from Tables B, C and D in the same way as for data entry 300. Two further things are worth noting on this entry 300. Firstly that the complete address information CM23AS, 14 Jackson Street, Cambridge is contained in collections 414, 416, 418 and 420 as well as being contained completely in entry 200. Accordingly there has actually been duplication of the address as opposed to the tables at A, B, C, D where this address is only contained once. For this reason the linear data shown in Figures 4A, B and C can actually be larger than the data in tables A, B, C and D. However, it is not the compactness of the data which is of particular concern for this invention, or indeed for databases generally since data storage devices such as hard disks are in themselves inexpensive. The advantage however, will be significant in the speed of analytics for reasons shown below. Additionally all of the information about the John Smith and Jackie Smith are stored in data entries 300 and 400 respectively, are completely independent and have no relationships between them. This means that data entry 300 and data entry 400 can be stored on different hard disks. This is in contrast to tables A and B which due to their link together via a foreign key ought to be stored in the same hard disk or else in order to look up the address for either Jacky Smith or John Smith it will be necessary to jump between hard disk to associate their name to determine their address. Doing so is slow in particular is of concern in analytics as will be described below.

A second thing of note with collection 400 is that there are no entries under attribute numbers 10, 11, 12, 13, 14 or 15. This is because Jackie Smith does not have an account entry in table C. What is recorded in this case would depend on what has been determined from the user U as to what should be done for the purposes of analytics. As described above in the example where there is an account for which start date is no known an entry will be put into the system but described as unknown. In some incidences it may be that the absence of accounts should still be recorded as for instance by a collection [2:10:no account[. In this instance, however, it is sufficient to simply have no entry and this of course saves on storage space.

In Figure 5C there is entry 500 which is built in the same way as entry 300 and 400. This contains information on Dr Bernard Lackey and for the gender in section 512 it is placed as unknown. Additionally there are additional sections starting from 550 for attributes 16, 17, 18, 19 and 20 which from meta-data 200 can see referred to additional account information. If there is a maximum number of accounts which an individual could hold then the meta-data can have separate attribute numbers continuing along for the maximum number of possible accounts. Alternatively if it is not known how many accounts a user can have or if they can have an unlimited number, the system 15 can instead use a longer attribute number with a master attribute number and a lesser attribute number. For example, instead of 11 and 16 both referring to an account ID the meta-data could store that as 11 followed by any number of digits refers with '11001' being the first account '11002' the second account '11003' the third, etc.

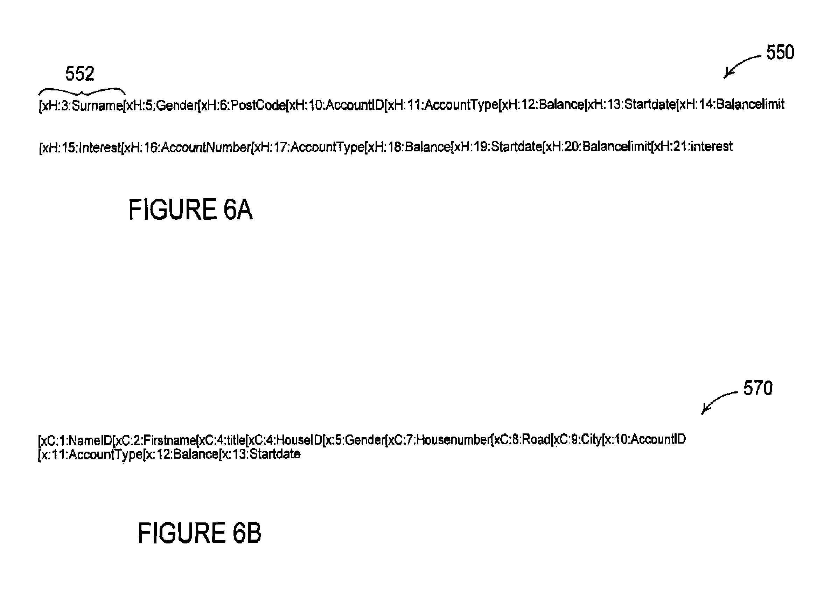

In Figures 6A and 6B are shown the meta-data equivalents to Figure 3 if optional step S 112 is applied. Here the attributes that have been stored in one linear stream in Figure 4 are separated into hot data and cold data.

The meta-data for hot data 550 is shown in Figure 5A which contains the attributes surname, gender, postcode, account type, balance, start date, balance limit and interest. All of these may be useful for analytics, for instance a user may want to group people by surname, to analyse how different accounts are purchased by men and women, how they are purchased in different towns, whether there is a relationship between balance and start date etc. Generally no address information except postcode will be entered in the hot data since the postcode can be used to determine a person's neighbourhood and city (such as by using dimensional data described below). The additional address information is either superfluous or specifies which of a small number of houses which share the same postcode the individual lives in. Analytics are unlikely to operate at the level of the specific house beyond the neighbourhood which the postcode can indicate. The "X" at the start of the collection has been altered to "xH" with the extra "H" indicating that it is hot data.

Contained in the cold metadata 570 are the attributes of name ID, first name, title, gender, house no, road, city, account ID, account type. It is rare that these will be useful for analytics. Accordingly each of the entries 300, 400, 500 will instead be split into two entries for the different known attributes. Rather than have new unique numbering for the attributes as shown in Figure 5A and 5B, this division of hot and cold can be done after the meta-data in Figure 3 is already produced but simply by indicating that collections with different numbers or attributes, i.e. the number in the second position in each section after the first colon, must be stored in different locations. This enables the majority of analytics to simply to refer to the hot data collections with an "xH" 522 and not the cold data, which means that the analysts can work quicker by having less data to read through.

With a database in place it is often desired to perform so called analytics which are a form of complex query.

To perform analytics on a relational/SQL database such as tables in Figure 1 it is necessary to use so called 'relational algebra' All of conventional relational algebra on relational type databases is based on set based theory. This allows for analytics to be performed by treating the table/relations with various operations such as selection, projection, Cartesian product, set union, set difference and rename the most important of which are based on joining different tables together. Some of these operations may have slightly different names in different forms of database such as in SQL but all of those very similar to a relational database will have similar set based operations and therefore the main advantages of this invention will apply to those as well.

For example, it may be wished to find out the total amount of money in accounts for each City in the database. If this is deduced from tables A, B, C and D in Figure 1 it will be necessary to gather information from tables B and C through various operations. In fact, since there is no foreign key linking table B and C it will also be necessary to include table A in the operations since it is via table A that tables B and C can be associated using foreign keys.

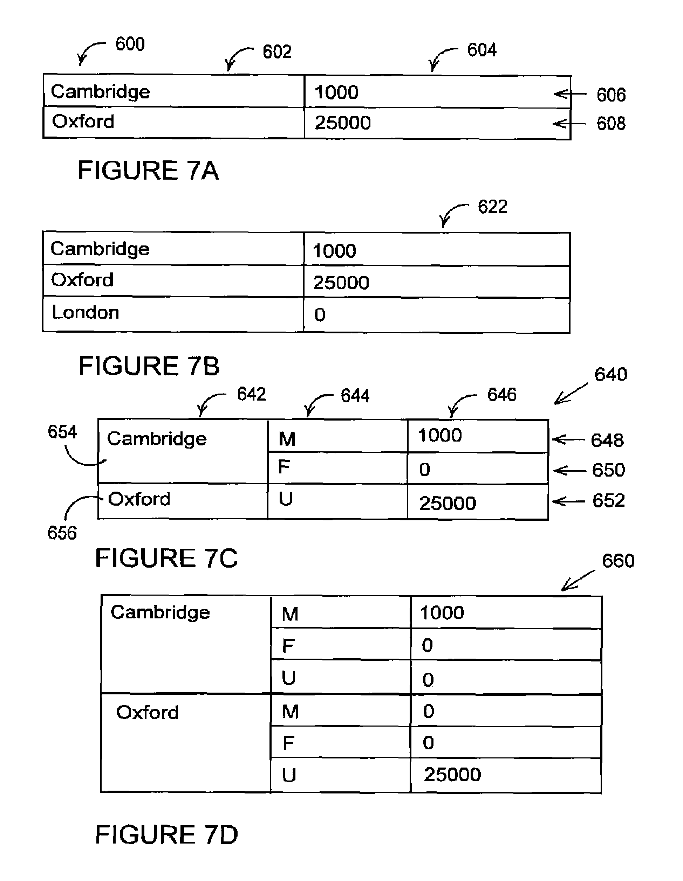

An example of the operations that might be performed is as follows, a projection may be performed on table A to reduce the table down to only columns A1 and A5 since these are the only columns of consequence before this analytic. Table B may be projected to only include columns B1 and B5 and table C may be projected to only include columns C2, C4 and C5. An intersection of the remaining projection of table A and the remaining projection of table B would then remove row BR3 since it contains house ID which is not contained within table A. An intersection of the previous result with the projection of table C should then remove either reference to Jackie Smith since any reference to row AR3 since the name ID 3 is not present in table C. Then by grouping a summary in the balances and grouping by City it should result in the result view shown in Figure 7A.

As can be seen in Figure 7A the result view 600 has two columns, 602 and 604 and two rows 606 and 608. The first column 602 is for the attribute City and the second column 604 is for a new attribute (or "measure") sum of balance based on the balance attribute. The two rows 606 and 608 therefore correspond to the two cities Cambridge and Oxford for which there is a non zero balance.

In contrast an example of how this could be produced by the fusion system 15 will now be described.

First an axiom is defined which in this case is the "City" attribute and against this the facts are placed which in this case is the sum of balance. This defined axiom "city" is known to correspond to unique number '9' in the meta-data in Figure 3. Additionally it is known that the balance from which to produce sums is to be found by the unique reference '12' Compartments in RAM based on the domain of the axiom (the complete list of values for the attribute) can be produced either before data in the hard-discs 32, 36, 42 are read or can be built in real time. For example the invention may first determine that the domain for city is the three different entries for city which are London, Oxford and Cambridge and provide a compartment for London, Oxford and Cambridge separately in which to enter read balances. Alternatively it may simply create these compartments as a read progresses. The latter case is explained in more detail below.

The computer system using processor 52, if it is provided, or by using any of or the combination of processors 28 to 32 and 30 and 38 if it is not, reads through each of the linear stores 300, 400, 500 in turn. In a more practical example where there are thousands of entries, the processor will continue through each of these rows.

The process therefore starts at linear data entry 300 and reads across from left to right looking for '[1:9'. The system 15 finds '1:9' at collection 320 and then read the city to the right of the colon following the 9. In this case this reads 'Cambridge' and a new compartment is provided in the RAM 54 (or 34, 36, 40) for "Cambridge". The programmed system 15 then knows that any balanced information in this linear entry 300 should be added to the compartment 'Cambridge'. In this case, as it continues to read to the right it finds an entry for ':12:' and reads the entry to the right of the last colon into the compartment. Accordingly from collection 326 it enters "1000" into the compartment marked Cambridge.

The programmed system 15 then reads linear entry 300 and when it reaches ':9:' it knows to read the name of the city to the right of the last colon. Since there is already a compartment for Cambridge, the system 15 now understands that it must enter any balance information read the entry 400 read into the existing compartment marked 'Cambridge'. In this case, in fact, the data entry stops at this point and there is nothing to add to the Cambridge compartment.

Finally the system reads linear data entry 500 and when it reaches ':9:' it reads the town 'Oxford'. There has not yet been a compartment made for Oxford and therefore it produces a new compartment marked 'Oxford' in the RAM 54. System 15 then places any balance information in the rest of this data entry 500 into the Oxford compartment. In this case the unit 15 first reads the number '5000' which is to the right of unique attribute ID 12 and adds this into the Oxford compartment and then adds 20000 which is to the right of unique attribute number 17. Accordingly, the same table 600 in Figure 6B is produced.

This simple example demonstrates why the invention can work effectively with multiple connected hard disk drives 32, 36, 42 rather than using the single data store 16 as with the relational data. To perform this analytic/query on tables A to C it was necessary to perform set based operations on multiple tables. These will not easily be possible if those tables were in different computers, since they all require communication between them. Indeed in practice if these tables were to be placed into different hard disks in connection with each other then most existing databases management systems such as Oracle would insist on transporting one of the entire tables to be next to the other table on which the operation could be performed. In the same hard disk before the operation is commenced. In the present example with very small tables, the computational costs of doing so may be quite small. However, it is possible that each table could maintain thousands or tens of thousands of rows in which case moving these tables between databases will be a significant undertaking. In contrast with the present invention there is no need for the separate data entries 300, 400, 500 to be in the same storage area. These are not joined together, they are simply read from left to right with the picture being built up during this read and once balance information has been placed into the appropriate compartment and that data entry finished with, the next read will be performed completely independently of the previous information read. The compartments in memory may even be in a separate memory device.

In a preferred form of the invention each separate linear data entry, 300, 400 and 500 will be kept in a single place so that in the example above when the read has read the city it will continue in the same hard disk to read the balance information to add into that memory compartment corresponding to that city. Even this is not essential, however, the unique number "X" 201 that begins each collection can be used so that the data can still be successfully placed in the correct compartment even if a linear data entry is split across two storage areas. For example, once collection 320 has been read the system 15 knows that any balance information in collection which begins with a number '1' needs to be added into the Cambridge compartment and this can be performed no matter where that data is stored. The advantage of having the data entry 300, 400 or 500 stored in one place, however, is that this memory of linking all balances with a '1' at the beginning to Cambridge can be rejected as soon as the read of section 300 is finished rather than keeping it in case there is additional information stored elsewhere. It can allow for data to be updated more easily if the location for all information corresponding to John Smith is the same, rather than having to keep a record of where the various parts of John Smith's associated data has been stored.

The analytics determined by system 15 also make it easier to provide so called zero results where there are no results for a given entry. For example if at some later point Jackie Smith was to move to the 34 Dee Avenue address, table A could be amended so that in column A5, row AR3, the house ID is changed from A '1' to A '3'. If the same set of relational operations are performed as before then the list produced by the analytical query will produce the same results view 600 in Figure 7A as before. Jackie Smith does not have an account and therefore will be removed during an intersection between the tables since there was no equivalent to her name ID '3' in table B.

If the same amendment was made to the data set stored in system 15 then linear data entry 300 will be amended so that the information in collections 410, 414, 416, 418 and 420 is changed. This of course requires more changes than to the tables A to C, though many embodiments of the invention have unit 15 in conjunction with SQL unit 14 and therefore this amended data will be simply read from the altered tables A, B, C and D.

When data entry 300 is read and the process reaches ':9:' the city to the right will be 'London' and therefore a London compartment produced. There will then not be any balance information to add to this and therefore since each compartment will start at zero the end result set 620 as shown in Figure 7B has a third row 622 in which there is an entry of 'London' with a total balance of zero. Accordingly the query has provided more results to the user since they have been told specifically that the balance for London is zero. If they are aware that there are customers in the system from London, then of course results at 600 will tell them of the same by implication. However, it is possible that they are not aware that there are any customer's in London and they will assume from the results at 600 that in fact they do not have any customer's in London, or simply not include it in any calculations. Many incidences of the so called null result has shown that a particular entry for an axiom has a zero result which is just as significant as a positive result.

The analytic process of system 15 also allows for easy production of result sets for multiple axioms in a hierarchical manner. For example, it may be wished to know the breakdown of balances for each gender for each given city. In order to do this with set based theory using tables A, B, C, and D a very complicated set of operations must be performed which will be computationally intensive and slow. With the linear data the operation will be barely more complex than that described above. Again the full set of combinations of city and gender can be calculated in advance and compartments produced in real time as the week progresses. In the case of compartments being built in real time then the process will work as before except that when the unit 15 reads linear data entry 300 it will read both the data value in collection 312 and in 320 to provide a compartment 'Cambridge' with a sub-compartment 'M' for male. When linear entry 400 is read this will then provide a new sub-compartment, 'F' for female under the same compartment, 'Cambridge' following this process in the logical manner produces the result set 640 show in Figure 7C.

In result set 640 there are three columns 642, 644 and 646 three rows, 648, 650 and 652 along with two master rows 654 and 656. Columns 642, 644 and 646 refer to the attribute city, gender and sum of balance respectively. The rows 648, 650 and 652 are for the combinations Cambridge male, Cambridge female and Oxford unknown respectively. The two master rows 654 and 656 are for the first chosen axiom "the city", for the two entries, 'Cambridge' and 'Oxford'. As can be seen for master row 656 it is equivalent to row 652 since there is only one gender entry whereas in master-row 654 it splits into the two rows 648 and 650 for the two gender sub categories.

More usefully in order to overcome the further showing of zero results the system can produce compartments as it reads, for categories in which it is not easily known how many the total number of entries in the domain will be, whereas for other attributes there is only a small domain of a finite number of possible answers so compartments or sub-compartments can be easily pre-provided. In the example given above in a much larger database it could be that there is a very large and unknown number of cities stored in the system. Accordingly it may be easier to produce the compartments for column 642 as the data is read. On the other hand for gender there can only be three possible entries which are male, female and unknown. Accordingly these can be set up before the entries are read to produce results set 660 in which there are six rows, many of which will have a zero entry in the last column. Accordingly more zero results are shown to the end user.

A third option is to produce sub-compartments as the data is read but to replicate any sub-compartments for a compartment into all the other compartments. So when the gender entry of 'F' in collection 412 is read a sub-compartment is produced not only for 'Cambridge' but also for 'Oxford'. Accordingly the result set will show that there is a zero balance for female customers in Oxford.

Simple calculations can be used to provide the full set of information for the master rows 655 and 656. For example, as well as the total balances for each of the six rows in 660 the results for the total sum for the whole of Cambridge and for all of Oxford can also be shown using conventional spread sheet style calculations for adding the sub-rows between each city. This does not require any set based theory or equivalent.

It can also be seen that the if the data from the hot and cold sets in Figure 5 is used then the process can be quicker. In this example a city was chosen which was decided to be one of the cold characteristics and therefore it may be that hot and cold are both read. Alternatively, the system can just as easily produce compartments for each post code and then use known dimension tables to categorise which post codes belong to which city and add the corresponding balances for each post code to produce the total for each city. In the present example of a very small database it would probably be quicker simply to read the hot and cold data set than to perform this. However, in some situations there will be thousands of linear data entries and associating post codes with cities is a relatively trivial operation as is adding up multiple rows as you would do in a spread sheet. In that example therefore it may be the reading material will be significantly decreased by simply reading the hot data set allowing each data entry to be read more quickly since there is less data contained in each one.

In general, since there is little computation or expense in producing the compartment, then where any category can be subdivided it is easiest to count at the lowest possible atomic level and produce a full set of results up from this to what the user is required. So in this example the count would be at the post code level with the post codes for each given city, e.g., all post codes beginning OX for Oxford to be added together to provide the desired value for the city. In practice there are many examples where such hierarchy exists. As well as post code and city there could be country and in the account information as well as simply current or savings there could be numerous different types of current and savings accounts possibly having further sub-categories of each type of current and savings account.

In data warehousing data is often divided into what is known as "fact" data and "dimension" data. Fat data is typically data specific to an individual record and may be at it most granular level often referred to as the atomic level. Dimension data in contrast typically list hierocracies of groups and subgroups which apply across multiple individuals or records. Dimension data can be stored in tables that act as look up data for the relatively static types of data that do not change as often as for example an individual's specific data. For example the fact that January is in winter is a static relationship that will not change and can be stored in a dimensions table.

In Figures 1 and 5 all of the data is what is s "fact" data. However dimensions data is often very useful in providing analytics and the system 10 is able to deal with such data.

In Figure 73 is shown a dimension table E. E has three columns E1, E2 and E3, three rows of data ER1, ER2 , ER3 along with a row ET which contains meta-data in the form of column attribute descriptors.

In column E1, row ET is contained the phrase 'city' which indicates that all of the data represented in the rows ER1 to ER3 in column A1 are examples of cities. By being positioned to the far left it also indicates that "city" is a sub-division of the group to its right in column E2 row ET which in this case is "county". That is that "city" is a more granular representation of an attribute (in this case location) than broader term "county" so there may be several cities in each county but only one country that corresponds to any specific county (a many to one relationship). Further to the right in column E3 row ET is the phrase "country" which is at a yet higher level of location information. The table E could have further columns for further known location relationships such as "region" and "continent".

As suggested above, postcode can be seen as a more granular than from of city and a column could be added to this to the right. This would though require information on which city every postcode is located in - which may not be readily available and could only be used if postcode to city was a true many to one relationship. If there were any examples of postcodes overlapping city boundaries then only the postcode in combination with street name and/or number could be treated as the atomic location data.

In rows ER1, ER2, ER3 it is shown that for the three relevant cities there are three different counties but that they are all part of the same country England.

The table E1 may be part of the relational database in the initial customer file. Alternatively it may be created to meet the user demands for analytics. For example the user may state that they wish to view analytics in which data is grouped by county. Further the dimension data may be stripped out of mixed fact and dimension tables in order during process 100.

During process 100 at step S106 dimension data is identified. Preferably only fact data stored at the atomic level is stored in the linear data arrays and dimension data is not. Accordingly when reading table E none of the data would be entered into metadata array 200. If it was found that postcode could be treated a more granular form of city then the entry for city at 220 would be removed as unnecessary.

The dimension data can be used for analytics. For example if rather query for the total amounts of money in each City( which produced results view 600), a query for the total amounts for each County may be made. Using the dimensional information it is a simple matter to answer both queries and an equivalent query for each Country at the same time.

First the axiom is defined which in this case is the "City" attribute since this is the atomic form of the group "county". Against this the facts are placed which in this case is the sum of balance. Additionally the hierarchy of City through to Country is already known form E1 and these higher forms can be placed against the axiom.

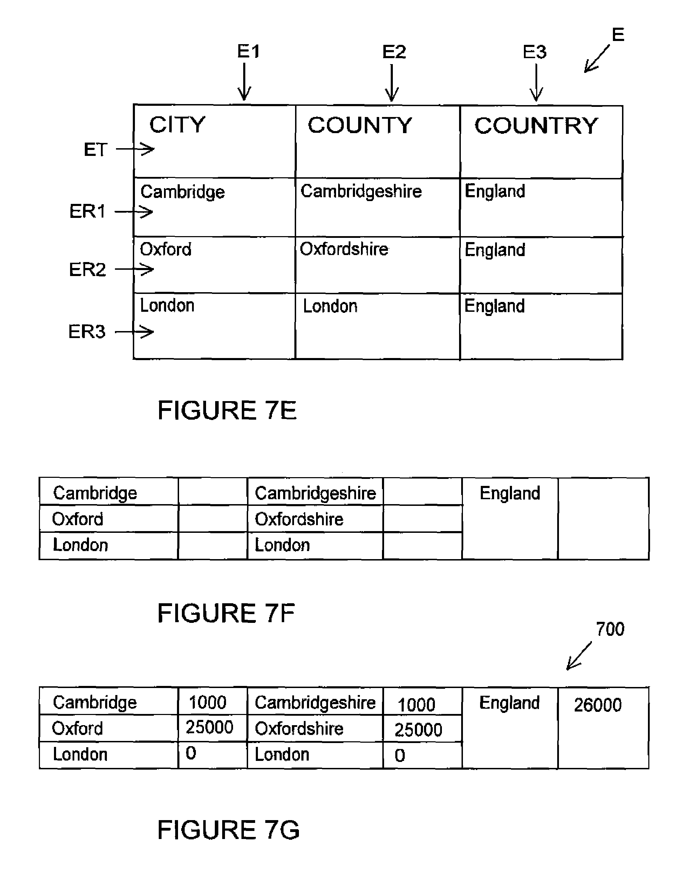

Compartments in RAM based on the domain of the axiom (city) and the higher groups (County, Country) are read or can be built in real time. For example the invention may first determine that the domain for city is the three different entries for city which are London, Oxford and Cambridge the domain for County is the London, Cambridgeshire and Oxfordshire and provide a compartment for each separately in which to enter read balances. Alternatively it may simply create these compartments as a read progresses. The County and Country information can even be added after the read.. In either case the template for the results view will look as shown in Figure 7f. where the compartments are built as the read progresses when the system first reads "Cambridge" and a new compartment provided in RAM 54 as described above, at the same time compartments for each higher level can be created from the dimension table which in this case is Cambridgeshire and England.

The process therefore starts at linear data entry 300 and reads across from left to right looking for '[1:9'. in the manner described above. Additionally it can be deduced from E that any entry for example "Cambridge" should add the same value to "Cambridgeshire" and "England".

The results set 700 is shown in Figure 7g and shows that the entries for balance for the cites is unchanged from result set 600, that the entries for the counties are the same as for the cities and that the Entry for "England" is 2600.

By filling all of the template in Figure 7f rather than just the requested "County" column it is possible to provide answers to future queries regarding city and country that may be asked in the near future without having to reread all the data.

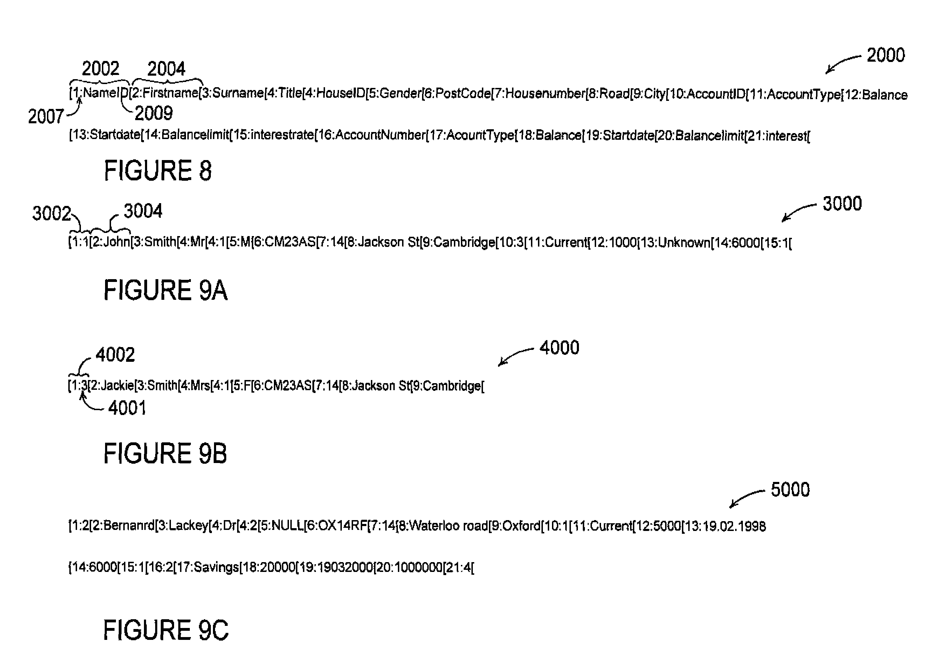

In Figure 8 is shown a second example 2000 of the meta-data for tables A, B, C and D from Figure 1 if loaded through process 100 so that the data is stored into hard disks 32, 36 and 42. With this second embodiment the base attribute value of each collection except the first is determined from it location rather than an explicit value in the collection itself.

In Figure 8 there is no 'X' equivalent to 201 with its job instead being achieved by the Name ID value in first collection 202.

The first number of each collection refers to the particular attribute contained in tables in the database. For metadata collection 2002 this number is '1' and is a reference to the first attribute of the first table which is column A1 of table ID which is the name ID. As described above, this could be indicated by having a number for the table, in this case table A, and the number of column table 1 or as is in this case just a different number for each attribute with the numbering sequence of attributes continuing through each of the tables. Duplication such as where name ID column is contained in both table A at A1 and table C at column C2 is avoided by only entering this attribute once.

After this number which refers to the attribute, there is a colon 2007 and then the meta-data at 2009 is equivalent to 209 and indicates the form of value to be contained in the equivalent position in any given linear string of stored data. For collection 2002 this simply refers to "name ID". The following square bracket at the end of 2002 then marks the end of the collection and the beginning of the next. The following collections follow the same format. As an example collection 2004, starts with a '2' which is a different number to the '1' used in collection 202 identifying that it the value stored belongs to a different attribute which in this case is equivalent to column A2 and is the first name. After the colon is meta-data equivalent to box A2, AT in table A and therefore containing the information 'first name'.

Once this meta-data has been created at steps S102, S104, S106, S108 and S110, the individual data values are stored at steps S112, S114 and S116. These are shown in Figures 9A, 9B and 9C.

In Figure 9A is shown the linear data entry 3000 in unit 15 for name ID "1". As shown in the first collection 3002 it reads '1:1' This refers to the attribute with unique reference "1" which according to the metadata in Figure 3 is the Name ID, and then that the specific data value in this case is "1" and therefore by virtue of the meta-data the Name ID in this case is 1. Accordingly this information is equivalent to entry AR1 in table A.

Collection 3004 is written as a continuous entry from 3002, only separated by a square bracket. Collection 3004 contains the data '2:John'. There is no explicit element of this data that this is associated around this same base attribute value, which in this example is John Smith, as collection 3002. Instead this determined by its ordinal location . Since all of the linear data entry 3000 is stored in the same location it can be determined that all of the collections grouped together in the memory have an implicit "x" value "1" from the value of "1" in the first collection 3002 in which the attribute is the base attribute . The second element indicates that information contained belongs attribute number "2", which according to the meta-data 200 is the 'first name'. The third element indicates that the data value for this attribute and customer ID is 'John' and therefore equivalent to entry A2 AR1 in table A. The rest of the information, in row AR1 is then contained in collections 306, 308, 310 and 312.

In Figure 9B is shown a second linear data entry 4000 similar to entry 400 without the first entry in each collection. Because it is the second linear data entry it relates a different customer to the first 3000 and therefore has a different unique number at 4001 in the first collection 4002 which in this case is number "3". As can be seen from section 4002, 4004 and 4006, this is data for Jackie Smith. The data has been built around Jackie Smith based on the data associated with her from Tables B, C and D in the same way as for data entry 3000.

In Figure 9C there is entry 5000 which is built in the same way as entry 3000 and 4000. This contains information on Dr Bernard Lackey.

Hot and Cold attributes can also be used with the second embodiment, in each case the person to which a collection of data corresponds i.e the linear data entry in which it forms a part is calculated by its location relative to other calculations in the memory rather than a specific value in each collection.

It is also possible to include time stamps in each data collection in the linear data entries. These time stamps can refer to the time at which the data value was created and/or no longer current. Using such timestamps it is possible to keep historical records of previous entries if entries are changed so that it would be known that Jackie Smith previously lived in Oxford after she moved to the London address. Accordingly this historical information can be used in analytics and the timestamps themselves can be used as an axiom or a metric- grouping results by time or specifying that only historical or current results should be shown.

Linear data storage also allows for entries about individuals to be easily altered to remove information which identifies them but still leave other information to be used in analysis of the data. This can be useful in countries in which data protection laws limit how or for how long companies can keep data on individuals for, since the usefulness of the data for analytics will not be lost. For example in data entries 300, 400 and 500 the values for attributes 1, 2, 3 and 6 can be removed or the whole corresponding collection can be removed. Even the first identifying number 201 can be altered to a 0 or x to remove all trace of the individual person. Despite these deletions the historical account and city data can be read and provided in answer to analytics.

In relation to use of dimension data it was mentioned that it can be efficient to answer three queries at once in case these are later required. The system can go further and produce templates like those in Figure 7e for all common or even all possible combinations of axioms, facts and dimension and populate these from a single read. This is particularly advantageous where there are large number of querying users and reading through data for each query uses significant resource. Additionally it allows for a more efficient user interface that allows human users to find their desired results more quickly.

Typically typing a data warehousing analytic query in the correct way can be challenging for a layman and if entered wrongly data will lead to a read and to a result set to be calculated that are not wanted. The process will need to be repeated until the entry is correct. By pre-completing the result sets to answer likely, (or all), queries, users can search within result sets without requiring further reads. As will be appreciated it has been found that laypeople are able to find desired information from existing data on the world wide web using search engines such as Google (RTM) despite the amount of existing data present. These search engines typically provide ten or more suggestions allowing the user to quickly find their desired result in that ten or by altering their search terms. It has now been realised that a similar approach can be taken with analytics with the current invention allowing users to simply and quickly find the desired analytics without frequent re-reads.

The process of reading and pre-filling the results sets can then be done periodically to reflect updates to the source data. The pre-completed result sets can then be stored for example on disk 32. As an alternative, or in addition, to the time stamps described above the results sets for each update (or the changes between the results sets of each update) can be permanently stored and used to provide the time based metrics/axioms for analytics.

Reading the linear stored data might also be required on the fly for specialist queries that have not been pre-completed. Once read these can be added to the stored results sets on disk 32 and after a predetermined number of requests have been recorded these queries can become part of the result set to completed with each periodic re-read.

An example of a suitable filter search interface 5000 for searching through the pre-completed result sets generated by system 10 is shown in Figure 10.

In the interface 5000 there is shown a root node 5001 that represents the complete set of pre-completed results and three filter nodes 5002, 5004, and 5006.

Each filter node 5002 comprises a text input block 5008, a search button 5010 and a child filter button 5010.

Starting with node 5002 the user has entered into test input block 5008 the word "Blackburn" which happens to be the name of a UK town. If the corresponding search button 5010 is pressed, this prompts the system 10 to look through the complete set of pre-completed queries for any that have the word "Blackburn" in their axiom or facts or measures. In some case this will give a large number of results. Once the search results are ready to view the search button 5008 next to the word Blackburn is disabled until the text entry "Blackburn" in block 5008 is altered. This is because if the same set of pre-completed results is to be used before the next periodic re-read there is little merit in repeating the same search.

The user can press the add child button 5012 to the left of the word block 5008 which will provide a more restricted search. Pressing this button produces a child filter node below the filter node. In the case of Figure 10 the user has already elected to restrict the search and hence there is a child node 5013 below the first 5002. In to its text block 5014 has been added the word "renal". When the corresponding search button 5010 is pressed then rather than search through all of the pre-completed queries this restricted search only searches through the result set found after looking for the word Blackburn in the node 5002 above. This is different from the usual internet search engines which whilst allowing multiple keywords always start again with a search through the complete database. Instead the system 10 stores a set of results for the first node 5002 and uses this for a shorter quicker search for the child 5013. By replacing the word in text block 5014 it is possible to search from this result set several time using different keywords.

By pressing the filter node 5001 a new parent filter node will be created to allow parallel searches by a single user via one interface.

In Figure 10 a user has run three parallel searches creating three parent filter nodes 5002, 5004, 5006 of all the pre-completed queries and has restricted these searches further either with one or two further child nodes in series. Where several child nodes are created in series each will only search the result set of the node directly above it.

If a word in a higher node such as 5002 is replaced then in some embodiments the system will not automatically update the results for the lower node 5013 but will indicate to the user that this restriction to the parent search results can be updated, such as by changing the colour of the text block 5014.

Below the nodes, interface 5000 displays the date in the query set that have been found to match the words. This is displayed under the word "Data" in section 5018. In Figure 10 the entered word "Eye" in text block 5017has been highlighted and it is shown at 5018 that from this keyword two matching pieces of data were found; "EYE" and the longer "EYELID" which contains the word EYE. This acts as a prompt to the user allowing them to change the words entered or restrict the search further if there are facts that are not desired to be reviewed in the results section 5018.

Rather than restrict the result set to the word entered into the text block 5008, each parent or child filter node can be specified to merely eliminate any results from the result set that include the word in the text block.

As well as viewing the facts that match the words entered, the user can press on any of buttons 5020 to review which axioms, axiom joins, hierarchies, facts, measures and time hierarchies are part of the queries in the filtered result set. For example under the search restricted to Bolton and eye "axioms" may indicate that both "individuals" and "cities" are axioms for different queries, whereas "measures" may reveal that there are "Counts" and "sums" in the queries in the result set. The user may only be interested in seeing results based around individuals and not interest in "counts" so could add further nodes and restrict the results further as desired.

In figure 11 the interface 5000 is shown alongside a results view 5050. The results view comprises a result set carousel 5052 and a textual result description section 5060.

In figure 11 the node 5017 is highlighted (which is a search restricted to the words Bolton and Eye) and the results carousel 5052 contains the results view of each of the query results filtered to contain these two words in graph from. In this case there are nine search results. A text description of each of the nine is displayed in section 5060 setting out the measures axioms and facts making up the query result. One of these textual descriptions will be highlighted or placed at the top of area 5060 and this description corresponds to the results set 5054 in graph form at the front of the results carousel 5052. By using arrow keys a user can move between these various graphs in the carousel representing all the query results in the filtered set, placing any of the desired nine at the front with the corresponding textual description moving or being highlighted alongside .

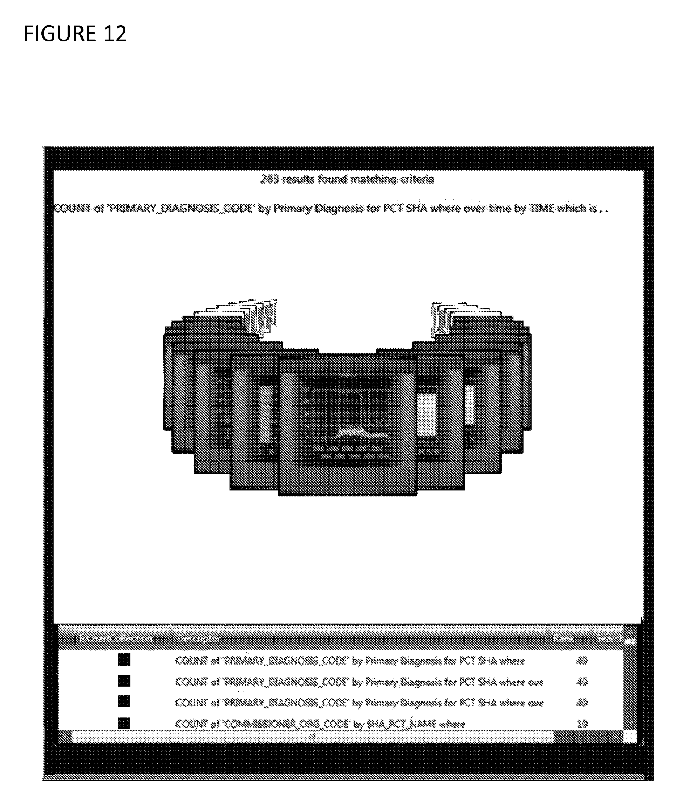

An expanded version of the result view is shown in Figure 12. This allows the user to rotate the carousel in order to move between the search results to find the desired graph. Even if only part of the required information for a particular query has been entered (for example the user may not know the correct name for the type of measure he wishes to analyse) but the desired query would be part of the result set and therefore easily found. Even if the desired query is the one initially shown at the front 5056, the carousel 5052 also allows the user to compare it to other query results. Additionally a user can scan through many similar/related analytics on a carousel 5056 looking for interesting or unexpectedly shaped graphs and then analyse these further.

## Claims

1. A data storage apparatus, for allowing analysis of stored data, in which data values are stored which belong to a plurality of attributes, the apparatus comprising a computer system including a storage memory,
a group of two or more collections of data, the group stored in the storage memory and belonging/corresponding to a base attribute of the plurality of attributes, each collection of data corresponding to the same value of a base attribute comprising, a data value belonging to an attribute associated with the base attribute , an attribute identifier corresponding to the attribute associated with the base attribute, and an identifying data value belonging to the base attribute or being stored in a location relative to one or more other collections of data from which location an identifying data value belonging to the base attribute can be determined,
and wherein two or more of the collections of data contain equivalent, and preferably identical, identifying data values, or the identifying values determined by their locations relative to other collections are equivalent, and preferably identical, and have attribute identifiers which correspond to, and data values belonging to, second attributes that are different from each other and to the base attribute but are associated with the base attribute.

2. A data storage apparatus according to any preceding claim comprising a plurality of groups of two or more collections of data, the collections of data in each group having an identifying data value, which is inequivalent/different to the identifying data value of the other groups but belongs to the same base attribute.

3. A data storage apparatus according to claim 1 or 2 wherein the collections of data in each group are grouped together in the same location in the storage memory.

4. A data storage apparatus according to any preceding claim wherein a, and preferably, each group comprises a first collection of data which first collection comprises a data value belonging to the base attribute, and an attribute identifier corresponding to the base attribute, the data value belonging to the first attribute being same value of a base attribute which each collection of data in the group corresponding to.

5. A data storage apparatus according to claim 3 and 4 wherein the identifying values contained in, or determinable based on location for, one of the collections in at least one, and preferably, each group are identical or equivalent to the data value belonging to the base attribute contained in the first collection.

6. A data storage apparatus according to claim 5 wherein the apparatus is configured to determine the identifying value of the first collection from its data value belonging to the base attribute, and the identifying values for the other collections in the group is determinable, and preferably the apparatus is configured to determine the values, by measuring the data value belonging to the base attribute of the first collection which the other collection is grouped with in the memory.

7. A data storage apparatus according to any preceding claim wherein each group comprises a plurality of data values belonging to different attributes in different collections, all the data values being associated with the identifying value of the base attribute.

8. A data storage apparatus according to any preceding claim wherein the storage memory comprises a plurality of memory units such as hard disk platters, in communication with each other.

9. A data storage apparatus according to claim 8 when dependent on claim 3 wherein one or more groups are stored in a different memory unit to one or more other groups, the apparatus preferably configured to perform analysis on groups across ,multiple memory units.

10. A data storage apparatus according to any preceding claim wherein the base attribute relates to people with each (identifying) data value belonging to it corresponding to a different person.

11. A data storage apparatus comprising a storage system containing a database such as a relational, SQL and/or Oracle database, the database containing a plurality of related tables/relations each comprising a set of one or more attributes which may be represented as one or more columns, and one or more rows/tuples containing data values belonging to each of the attributes in the set of attributes,
and one or more processors programmed to read the database and to generate the data storage apparatus of any preceding claim by determining an attribute in the database to be used as the base attribute and to calculate from the relations between tables and/or from the schema which attributes to associate with each data value belonging to the base attribute and to generate a collection of data for each read data value in the database belonging to an attribute determined to be associated with the base attribute, wherein the generated data value in the collection of data that belongs to an attribute associated with the base attribute being equivalent to that read data value, the generated identifying data value is equivalent to the data value belonging to the base attribute which is related via a foreign key to the read value in the database, and the apparatus stores the generated data in the storage system and uses the system as the memory.

12. A data storage apparatus according to claim 11 wherein the storage system comprises more than one memory device and the storage memory is stored on a different device to the database.

13. Data analysing apparatus comprising a data storage apparatus according to any preceding claim and a processor that may be additional to, or part of , the data storage apparatus, the processor programmed so that when a user selects an attribute as an axiom it reads through a plurality of collections of data and enters the data value in any data collections read which are determined to have the attribute identifier corresponding to the attribute chosen as the axiom into memory in a memory compartment which is a specified location in a memory.

14. Data analysing apparatus according to claim 13 wherein the apparatus is programmed so that when the user selects an attribute as a metric to record against the axiom it reads through a plurality of collections of data and enters a value representing the data value in any data collections read which have been determined to have the identifier corresponding to the attribute chosen as the metric into a memory compartment corresponding to the data value with the identifier corresponding to the attribute chosen as the axiom read from a collection which contains the same identifying value as the data collection with the identifier corresponding to the attribute chosen as the metric, and/or wherein collections of data are stored in a location or marked according to the calculated likelihood of use of an attribute in analysis, and wherein the processor is programmed to read through collections of data with attributes that have been calculated to be more useful before those with attributes calculated to be less useful.

15. Data analytics searching apparatus, preferably comprising the apparatus of claims 13 or 14, wherein the results of a plurality of queries such as in the form of selected metrics to be measured against selected axioms, preferably determined using the apparatus of claim 14, are stored in a memory and wherein the apparatus provides a filter interface with a first input and is configured to filter the results of the plurality of queries based on entries into the first input of the filter interface and/or display the results of the plurality of queries or the filtered results of the plurality of queries in graphical from, preferably in the form of a carousel, allowing a user to move between the different graphs, preferably wherein the apparatus is configured to provide a second input in the filter interface and to use entries into second input to the filter the filtered results of the plurality of results based on entries in the first input and preferably display the filtered filtered results of the plurality of queries in graphical from allowing a user to move between the different graphs.
